(19) Europäisches Patentamt
European Patent Office
Office européen des brevets

(11) EP 0 435 514 B1

(12) EUROPEAN PATENT SPECIFICATION

(45) Date of publication and mention of the grant of the patent:
**11.09.1996 Bulletin 1996/37**

(51) Int Cl.$^6$: **C08F 10/02**, C08F 4/654, C08F 4/655

(21) Application number: **90313570.5**

(22) Date of filing: **13.12.1990**

# (54) Catalyst and prepolymer used for the preparation of polyolefins

Katalysator und Prepolymer für Polyolefinherstellung

Catalyseur et prépolymère utilisées dans la préparation de polyoléfines

(84) Designated Contracting States:
**AT BE CH DE DK ES FR GB GR IT LI LU NL SE**

(30) Priority: **22.12.1989 FR 8917403**

(43) Date of publication of application:
**03.07.1991 Bulletin 1991/27**

(73) Proprietors:
- **BP Chemicals Limited**
  **London EC2M 7BA (GB)**
  Designated Contracting States:
  **BE CH DE DK ES GB GR IT LI LU NL SE AT**
- **BP CHEMICALS SNC**
  **F-92086 Paris La Défense 1 (FR)**
  Designated Contracting States:
  **FR**

(72) Inventors:
- **Bailly, Jean-Claude André, BP Chemicals SNC F-13117 Lavera (FR)**
- **Chabrand, Christine Jacqueline, BP Chemicals SNC F-13117 Lavera (FR)**

(74) Representative: **Denbigh, Keith Warwick et al**
**BP INTERNATIONAL LIMITED**
**Patents Division**
**Chertsey Road**
**Sunbury-on-Thames Middlesex, TW16 7LN (GB)**

(56) References cited:
**EP-A- 0 120 734**
**EP-A- 0 336 545**
**US-A- 4 659 685**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a solid catalyst suitable for (co-)polymerizing olefins, especially ethylene, the solid catalyst being obtainable by contacting a particular magnesium chloride support with a zirconium metallocene. It also relates to the use of the catalyst as such or else in the form of a prepolymer in a heterogeneous process of polymerization or copolymerization of olefins, especially ethylene.

It is known that it is possible to manufacture polyolefins in the presence of a catalyst system comprising a catalyst based on a zirconium metallocene and a cocatalyst consisting of an organoaluminium compound, especially an aluminoxane. However, this catalyst is preferably employed in a homogeneous process such as in solution in a liquid hydrocarbon and is not suited to heterogeneous processes of polymerization in suspension in aliphatic hydrocarbons or in gaseous phase.

According to US Patent No. 4,659,685, it is also known to manufacture polyolefins with the aid of a catalyst system comprising a solid catalyst consisting of a zirconium metallocene deposited on a support such as a refractory oxide or a magnesium chloride. However, the catalysts thus obtained have a broad particle size distribution and consist of particles having no well-defined shape. Furthermore, they generally produce polyolefins with relatively broad molecular weight distribution.

For a number of years attempts have been made to develop a high-activity solid catalyst comprising a zirconium metallocene for a heterogeneous process of the (co-)polymerization of olefins especially ethylene. In particular, a solid catalyst whose support can receive a large quantity of zirconium has been sought. Attempts have been made, furthermore, to develop a catalyst suited to the heterogeneous processes of polymerization of olefins in suspension in an aliphatic hydrocarbon or in gaseous phase, processes in which it is important to be able to control the size, the particle size distribution and the morphology of the catalyst particles at the same time. It has also been shown to be important that any solid catalyst should be able to withstand the growth stresses during the polymerization, especially in the initial stage of a gas phase polymerization. We have found that the growth stresses with zirconium metallocene catalysts are generally much greater than those of a catalyst based on a titanium or vanadium chloride which is less active in olefin polymerization. It is also desirable that the solid catalyst be capable of producing an ethylene polymer or an ethylene copolymer with an easily controllable average molecular and a narrow molecular weight distribution, so as to enable this polymer or copolymer to be shaped using injection and moulding.

It has now been found that it is possible to prepare a solid catalyst with high activity in the (co-)polymerization of olefins, prepared by contacting a relatively high amount of a zirconium metallocene with a magnesium chloride support. In particular, this catalyst is in the form of spheroidal particles which are suited to the heterogeneous polymerizations of olefins in suspension or in gaseous phase and which are capable of withstanding the enormous growth stresses during the polymerization.

The present invention relates therefore to a solid catalyst suitable for a heterogeneous process for polymerizing one or more olefins, in particular ethylene, the solid catalyst being prepared by contacting a zirconium metallocene with a magnesium chloride support, characterized in that the solid catalyst is obtainable by a process comprising:

(1) a first stage, wherein a solid support (A) containing from 80 to 99.5 mol% of magnesium dichloride and from 0.5 to 20 mol% of at least one organic electron-donor compound, D1, free from labile hydrogen, the solid support (A) being in the form of spheroidal particles with a mass-average diameter, Dm, of 10 to 100 microns and a particle size distribution, such that the ratio of Dm to the number-average diameter, Dn, of the particles is not higher than 3, preferably not higher than 2.5 and especially not higher than 2, is brought into contact with at least one electron-donor compound, D2, containing labile hydrogen,

(2) then, a second stage, wherein the solid support resulting from the first stage is brought into contact with a zirconium metallocene (B) optionally with an organoaluminium compound (C), preferably an aluminoxane. The contact of the solid support resulting from the first step with (B) and optionally (C) may be performed in various ways, for instance by contacting the solid support resulting from the first step with (B) followed by (C) or vice versa.

In the process for the preparation of the catalyst, a particular magnesium chloride support (A) is used, containing an organic electron-donor compound, D1, in a relatively large quantity. The support comprises from 80 to 99.5 mol% preferably from 80 to 95 mol% and especially from 80 to 90 mol% of magnesium dichloride and from 0.5 to 20 mol% preferably from 5 to 20 mol% and especially from 10 to 20 mol% of the compound D1.

The support, which is based essentially on magnesium dichloride, may additionally contain a chlorine containing aluminium derivative, such as aluminium trichloride, as well as optionally a magnesium chloride containing Mg-C bonds. The quantity of the chlorine containing aluminium derivative may be lower than or equal to 30 mol%, preferably 20 mol% or less relative to the magnesium dichloride such as 1 to 20 mol%. The quantity of Mg-C bond may be lower than or equal to 5 mol%, preferably 1 mol% or less relative to the magnesium dichloride. Especially, the support contains substantially no Mg-C bond.

The organic electron-donor compound, D1, is generally known as a Lewis base and must be free from labile hydrogen. It cannot, for example, be chosen from water, alcohols or phenols. It has an ability to complex magnesium dichloride. It is advantageously chosen from ethers, esters, thioethers, sulphones, sulphoxides, secondary amides, tertiary amines, tertiary phosphines and phosphoramides. Electron-donor compounds of low complexing power, such as cyclic or non-cyclic ethers, are preferred.

The organic electron-donor compound, D1, is advantageously distributed homogeneously throughout the support particle, forming a homogeneous composition of magnesium dichloride and compound D1. Consequently, a support of this kind cannot normally be prepared merely by bringing anhydrous magnesium dichloride particles into contact with the compound D1. For this reason it is recommended that the support be prepared by precipitation of magnesium dichloride in the presence of the compound D1.

The support (A) consists of particles whose specific surface area (BET) may be from 20 to 100 $m^2/g$, preferably from 30 to 60 $m^2/g$. It consists of spheroidal particles which have a substantially spherical shape, e.g. in which the ratio D/d of the particles is close to 1, D and d being the major axis and the minor axis of the particles respectively. The ratio D/d is generally lower than or equal to 1.5, preferably 1.3 or less, such as 1 to 1.5, or 1 to 1.3.

The particles of the support (A) have a mass-average diameter of 10 to 100 microns, preferably of 15 to 70 and especially 20 to 50 microns. They have a very narrow particle size distribution, such that the ratio Dm/Dn of the mass-average diameter, Dm, to the number-average diameter, Dn, is not higher than 3, preferably not higher than 2.5 and especially not higher than 2, such as 1 to 3, or 1 to 2.5, or 1 to 2 and especially 1.1 to 1.5. Preferably, there is a virtually total absence of particles of diameter greater than 1.5 x Dm or smaller than 0.6 x Dm; the particle size distribution is usually such that more than 90% by weight of the particles of the same single batch have a particle size in the range Dm± 10%.

The support may, in particular, be prepared by reacting a dialkylmagnesium compound with an organic chlorine compound in the presence of the electron-donor compound, D1, acting as a complexing agent and not as a reactant in this preparation. For this reason in this production process, the compound D1 cannot be chosen from electron-donor compounds capable of reacting with organomagnesium compounds e.g. from esters. The dialkylmagnesium compound chosen may be a product of formula $R_1MgR_2$ in which $R_1$ and $R_2$ are identical or different alkyl radicals containing from 2 to 12 carbon atoms, and which is soluble in the hydrocarbon medium in which the preparation of the support will preferably be carried out. The organic chlorine compound which is chosen is an alkyl chloride of formula $R_3Cl$ in which $R_3$ is a secondary or, preferably, tertiary alkyl radical, preferably containing from 3 to 12 carbon atoms. It is preferred to employ, as electron-donor compound, D1, an ether of formula $R_8OR_9$ in which $R_8$ and $R_9$ are identical or different alkyl radicals, especially containing from 1 to 12 carbon atoms.

The various reactants used for the preparation of the support (A) can be used with:

- a molar ratio $R_3Cl/R_1MgR_2$ of from 1.5 to 2.5, preferably from 1.9 to 2.3, and
- a molar ratio $D_1/R_1MgR_2$ of from 0.1 to 1.2, preferably from 0.3 to 0.8.

The reaction between $R_1MgR_2$ and $R_3Cl$ in the presence of the electron-donor compound D1 is a precipitation which takes place in an inert liquid medium, e. g. a liquid hydrocarbon, with stirring preferably at a temperature of 0 to 100°C. To obtain an excellent support, in particular one with a large quantity of the electron-donor compound, D1, it is recommended to perform the precipitation reaction at a relatively low temperature ranging from 10 to 50°C, referably from 15 to 35°C. Preferably, the precipitation reaction should proceed extremely slowly, over a period of at least 10 hours e.g. 10 to 50 hours, preferably a period ranging from 10 to 24 hours, so as to permit a suitable formation of the solid product, in particular the insertion of a large quantity of compound D1 and its uniform dispersion in the support.

The first stage of the catalyst preparation may consist in bringing the support (A) into contact with an electron-donor compound containing labile hydrogen, D2, e. g. an alcohol, a phenol, a primary amide, a primary or secondary amine, a primary or secondary phosphine. D2 is preferably chosen from alcohols and phenols. It is preferred to employ an alcohol containing from 1 to 12 carbon atoms, in particular ethanol, propanol, n-butanol, n-pentanol or n-hexanol. The compound D2 generally has a complexing power for magnesium chloride which is higher than that of the compound D1.

From 0.05 to 3 moles, preferably from 0.1 to 1 mole of compound D2 can be used per mole of magnesium of the support (A). If the amount of D2 used is too high, the support gets more fragile. The contact of the compound D2 with the support (A) may be brought about at 0 to 100°C, preferably 0 to 70°C. It is preferably brought about with agitation e.g. stirring in an aliphatic or aromatic liquid hydrocarbon such as n-hexane or toluene, over a period which can range from 10 minutes to 5 hours. In practice, the contact can be brought about in various ways, for example by slow addition of the compound D2 to the support (A) in a suspension in a liquid hydrocarbon under a continuous agitation. It is generally found that most of the compound D2 used in this stage becomes fixed in the support without appreciably modifying the morphology of the support. Only the specific surface area of the support is increased and helps to deposit in the support a relatively high amount of zirconium which is strongly bound to the support. Thus treated with the compound D2, the support may be washed one or more times with the aid of a hydrocarbon before proceeding to the next stage. The solid product resulting from the first stage may have the general formula:

$$MgCl_2, x\ D_1, y\ D_2$$

wherein D1 and D2 denote the above-mentioned electron-donor compounds, x is a number ranging from 0.0005 to 0.15, especially from 0.001 to 0.1 and y is a number ranging from 0.05 to 3, particularly from 0.1 to 1.

The second stage of the catalyst preparation consists in bringing the support treated with the compound D2 into contact with a zirconium metallocene (B). In particular, the zirconium metallocene is a metallocene containing a tetravalent zirconium , with at least one Zr-C bond which is a covalent or pi-bonded one. It is also called zirconocene, which preferably corresponds to the general formula

$$R_4R_5R_6R_7Z_r$$

in which $R_4$ denotes a cycloalkadienyl radical or cycloalkadienyl radical substituted by at least one alkyl radical e.g. of 1 to 6 carbon atoms, such as methyl or ethyl, or by at least one alkoxy radical e.g. of 1 to 6 carbon atoms, or a fused ring cycloalkadienyl group e.g. of 7 to 14 carbon atoms such as indenyl or tetrahydroindenyl, and each of $R_5$, $R_6$ and $R_7$ being identical or different denotes a cycloalkadienyl radical, a cycloalkadienyl radical substituted by at least one alkyl or alkoxy group e. g. of 1 to 6 carbon atoms, such as methyl ethyl, methoxy, ethoxy, propoxy or butoxy, an aryl radical e.g. an aromatic hydrocarbyl group such as one of 6 to 19 carbon atoms such as phenyl, an alkyl radical e.g. of 1 to 6 carbon atoms such as methyl or ethyl, a cycloalkyl radical e.g. of 5 to 7 carbon atoms such as cyclohexyl, an aralkyl radical e.g. of 7 to 19 carbon atoms such as aromatic hydrocarbyl alkyl such as benzyl, a halogen atom e.g. chlorine or bromine, an alkoxy radical e.g. of 1 to 12 carbon atoms such as methoxy, ethoxy, propoxy or butoxy, or a hydrogen atom. Provided that when $R_5$ represents a cycloalkadienyl radical or a substituted cycloalkadienyl radical, or a fused ring cycloalkadienyl group, $R_4$ and $R_5$ may be bonded to each other either directly or via a lower alkylene group e.g. of 1 to 4 carbon atoms. The cycloalkadienyl radical is preferably one with a conjugated $C_5$ ring diene group, such as a cyclopentadienyl. Examples of suitable radicals for $R_4$, $R_5$, $R_6$ or $R_7$ may contain 6 to 22 carbon atoms and preferably are methylcyclopentadienyl, ethylcyclopentadienyl, dimethylcyclopentadienyl, indenyl, ethylenebisindenyl or tetrahydroindenyl radical.

The zirconium metallocene may, in particular, be chosen from bis(cyclopentadienyl) methylchlorozirconium, bis (cyclopentadienyl)dichlorozirconium and bis(4,5,6,7-tetrahydroindenyl)ethylenedichlorozirconium.

Preferably, the zirconium metallocene also comprises at least one Zr-X bond, wherein X represents a halogen atom e.g. a chlorine or bromine atom, or an alkoxy group e.g. of 1 to 12 carbon atoms.

During the second stage the support may be preferably brought into contact with the organoaluminium compound (C), preferably the aluminoxane, because the compound (C) helps to deposit in the support a relatively high amount of zirconium which is then strongly bound to the support. The compound (C) may be a trialkylaluminium, e.g. trimethylaluminium, or triethylaluminium, or an alkylaluminium hydride, an alkylaluminium alkoxide, or an alkylaluminium halide, e.g. diethylaluminium chloride, or preferably an aluminoxane. The aluminoxane may be either a linear aluminoxane corresponding to the general formula

$$(R)_2AlO(Al(R){-}O)_nAl(R)_2$$

in which each R denotes an alkyl radical e.g. of 1 to 6 carbon atoms, such as methyl or ethyl, and n is a number ranging from 2 to 40, preferably from 10 to 20, or a cyclic aluminoxane corresponding to the general formula

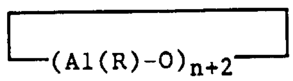

in which R and n are as defined above. The aluminoxane is preferably a methylaluminoxane.

In the second stage the support resulting from the first stage may be employed in the form of a suspension in an aliphatic or, preferably, aromatic hydrocarbon.

The zirconium metallocene (B) may be used in the form of a solution, especially in an aromatic hydrocarbon such as toluene. The concentration of the solution may be from 0.1 to 50 millimoles of zirconium per litre. The organoaluminium compound (C) which is preferably an aluminoxane may also be in the form of a solution in a hydrocarbon, especially an aromatic hydrocarbon such as toluene, at a concentration which may go up to 30% by weight of aluminium.

The contact of the support resulting from the first stage with the zirconium metallocene (B) may be brought about in various ways. It is possible, for example, to add the support to a solution of (B), or the reverse. The contact is preferably brought about in the presence of the compound (C), preferably the aluminoxane. In this case, a solution of the zirconium metallocene (B) and a solution of the compound (C) can be added to the support either simultaneously or especially as a previously prepared mixture. It is also possible to add the support to the mixture of these two solutions.

The contact may also be brought about by successively adding to the support a solution of the zirconium metallocene (B) and then a solution of the compound (C). It is also possible to add successively to the support a mixture of the solution of (B) with a part of the solution of (C), and then the remainder of the solution of (C).

The contact may also be brought about by first of all adding a solution of (C) to the support, and then a solution of (B). It is also possible to add to the support first of all a mixture of the solution of (C) with a part of

the solution of (B), and then the remainder of the solution of (B). These successive additions can be carried out by being sequenced immediately one after the other or else by being separated by periods ranging from a few minutes to a few hours, preferably from 10 minutes to 5 hours.

In all cases it is preferable that the contact be brought about with agitation e.g. stirring, for a total period ranging from 5 minutes to 10 hours, preferably from 10 minutes to 5 hours. During the contact, the addition of a component may be very fast or slow and uniform over a period ranging from 5 minutes to 5 hours. The temperature can be from 0°C to the boiling temperature of the hydrocarbon solvent employed in the solutions, and is preferably from 0°C to 110°C. When the preparation of the catalyst is carried out in the presence of the compound (C) preferably the aluminoxane, and when the latter is used separately from the zirconium metallocene (B), the contact of the support with (C) may be brought about at a temperature other than that at which the support is brought into contact with (B).

The quantities of the components used during the second stage may be such that:

- the molar ratio of the quantity of Zr of the zirconium metallocene (B) to that of the Mg of the support is from 0.001 to 1, preferably from 0.005 to 0.5, and more particularly from 0.01 to 0.1,
- the molar ratio of the quantity of Al of the compound (C) to that of Zr of the zirconium metallocene (B) is from 0 to 1,000, preferably from 1 to 500, especially from 5 to 200.

In particular, the quantity of the zirconium metallocene (B) used during the second stage may be such that the molar ratio of the quantity of Zr to that of the compound D2 used in the first stage is from 0.01 to 2, preferably from 0.05 to 1.

The second stage of the catalyst preparation may be carried out in the presence of an organic electron donor compound, free from labile hydrogen, added when the components are brought into contact, it being possible for this electron-donor compound to be identical to or different from the compound D1 present in the support employed. It may additionally be chosen from organic silicon compounds such as a silane compound having the general formula $R^{10}_{4-n}Si(OR^{11})_n$ wherein $R^{10}$ and $R^{11}$ being identical or different denote an alkyl, cycloalkyl, aralkyl, or aryl, radical e.g. of 1 to 19 carbon atoms and n is a number from 1 to 4; the silane compound may be the cyclohexylmethyldimethoxy silane.

The catalyst is obtained in the form of a solid which can be isolated by removing the hydrocarbon solvent(s) employed during the preparation. The solvent(s) may, for example, be evaporated off at atmospheric pressure or a lower pressure. The solid catalyst may also be washed with a liquid hydrocarbon, preferably an aliphatic hydrocarbon such as n-hexane or n-heptane. The catalyst is in the form of spheroidal particles whose morphology, size and particle size distribution are substantially identical with those of the solid support (A) employed for preparing the catalyst and are otherwise described above.

It has surprisingly been found that the catalyst may comprise relatively large quantities of zirconium. It is thought that this surprising result is due to the fact that the solid magnesium chloride support employed is of a particular nature. It comprises, in particular, an electron-donor compound D1 free from labile hydrogen, which is dispersed homogeneously in the support and initially present in the support in a relatively large quantity, this support having then been subjected to a treatment with an electron-donor compound containing labile hydrogen, D2.

The solid catalyst may be employed directly in a (co)-polymerization of olefin, e.g. $C_2$ to $C_8$ alpha-olefin, such as ethylene or propylene, preferably ethylene, in the presence of a cocatalyst chosen from the organometallic compounds of a metal belonging to group II or III of the Periodic Classification of the elements. In particular, the cocatalyst may be one or more organoaluminium compounds such as a trialkylaluminium, an organoaluminium hydride, an organoaluminium alkoxide or an organoaluminium halide, e.g. with each alkyl group of 1 to 10 carbon atoms, such as trimethylaluminium, triethylaluminium, tri-n-hexylaluminium, tri-n-octylaluminium, or diethylaluminium chloride, but preferably an aluminoxane corresponding to the general formula mentioned above. The aluminoxane employed as cocatalyst during the polymerization may be identical to or different from that which is optionally employed in the catalyst preparation. The aluminoxane may be employed mixed with an organoaluminium compound such as that described above, e.g. a trialkylaluminium such as trimethylaluminium. The quantity of cocatalyst employed in polymerization is such that the molar ratio of the quantity of metal in the cocatalyst to that of zirconium in the catalyst is between 1 and 10,000, preferably between 10 and 1,000.

The solid catalyst may be employed as such in polymerization or preferably in the form of a prepolymer of olefins. A prepolymerization step is a preferred method in a heterogeneous process for polymerizing olefins by means of the present catalyst, because the zirconium metallocene of the catalyst is more strongly fixed in the support than a non-prepolymerized catalyst and it is less capable of being extracted from the catalyst and producing fine particles of polymer during the polymerisation. Another advantage of transforming the present catalyst into a prepolymer is the improvement of the quality of the polymers obtained therefrom, in particular a polymer powder with a better morphology, higher bulk density and improved flowing properties.

The prepolymer is obtained by bringing the solid catalyst into contact with at least one olefin, e.g. $C_2$ to $C_8$ alpha-olefin, such as ethylene or propylene, preferably ethylene or a mixture of ethylene and at least one alpha-olefin containing from 3 to 8 carbon atoms. The prepolymerization may be performed in a slurry in a liquid hydrocarbon or in a gas phase, at a temperature from 0 to 100°C, preferably from 20 to 90°C, especially from 50 to 80°C, and under a total pressure from 0.1 to 5 MPa. The prepolymerization may be performed in the presence of a cocatalyst, such as that described above, either by adding to the prepolymerization medium the cocatalyst, preferably an aluminoxane or a mixture of an aluminoxane with an organoaluminium compound such as a trialkylaluminium, or by using the catalyst containing a sufficient quantity of the organoaluminium compound (C) preferably an aluminoxane, or by a combination of the two methods, in such a way that the total atomic ratio of Al/Zr in the prepolymerization medium is from 10 to 1000, preferably from 50 to 500. The cocatalyst added to the prepolymerization medium, if any, may be identical or different from that employed during the polymerization. The prepolymerization may be stopped when the prepolymer contains from 0.1 to 500, preferably from 10 to 400 g of polyolefin per millimole of zirconium.

The prepolymer constitutes a further aspect of the invention and preferably consists of particles of polyethylene or copolymer of ethylene with up to 10% by weight of at least one C3 to C8 alpha-olefin, and comprises an active zirconium metallocene catalyst for a further (co-)polymerization of olefins, essentially comprising atoms of zirconium, magnesium, chlorine and aluminium and being preferably free from refractory oxide, such as alumina or silica, the prepolymer containing from 0.1 to 500, preferably from 10 to 400 g of polyethylene or copolymer of ethylene per millimole of zirconium, and having an atomic ratio of Al/Zr from 10 to 1000, preferably from 50 to 500. Advantageously the prepolymer may consist of spheroidal particles, having a mass-average diameter, Dm, from 10 to 500 preferably from 30 to 300 and especially from 50 to 250 microns and a narrow particle size distribution such that the ratio of Dm to the number-average diameter Dn of the particles is not higher than 3, preferably not higher than 2.5 and especially not higher than 2.

The catalyst or the prepolymer is particularly suitable for a heterogeneous polymerization process, either in suspension in a saturated aliphatic hydrocarbon or in gaseous phase in a fluidized bed, under a total pressure of 0.1 to 5 MPa and at a temperature of 10 to 110°C, in the presence of a cocatalyst, such as that described above, preferably an organoaluminium compound and especially an aluminoxane or a mixture of a trialkylaluminium with an aluminoxane, such as that described above, in a quantity such that the total atomic ratio of Al/Zr in the (co-)polymerization medium is from 10 to 1000, preferably from 50 to 500. The catalyst or the prepolymer is preferably used in a gaseous phase polymerization process, such as in a fluidized bed, because the polymers or copolymers of ethylene thus obtained generally consist of powders having improved flowing properties and higher bulk density in comparison with those obtained in a slurry process.

The polymers or copolymers of ethylene obtainable according to the present invention, preferably in a gaseous phase (co-)polymerization process, constitutes a further aspect of the invention and may have a density from 0.89 to 0.965 g/cm$^3$, a melt index (measured according to ASTMD 1238 condition E) from 0.01 to 50, preferably from 0.1 to 20 g/10 minutes, a molecular weight distribution (expressed by Mw/Mn) from 2 to 5, preferably from 2 to 4, catalyst residues free from refractory oxide, such as silica or alumina, essentially consisting of atoms of magnesium, chlorine, aluminium and zirconium, the quantity of zirconium being 0.5 to 20, preferably from 1 to 10, especially from 1 to 5 (ppm) parts per million by weight, and a level of ethylenic unsaturation not higher than 0.6, e.g. 0.1 to 0.6 and preferably from 0.3 to 0.5 per 1000 carbon atoms, in particular a level of vinyl unsaturation not higher than 0.5 e.g. 0.1 to 0.5, preferably from 0.2 to 0.4 per 1000 carbon atoms, and a level of vinylidene unsaturation not higher than 0.2 e.g. 0.01 to 0.2 and, preferably from 0.05 to 0.1 per 1000 carbon atoms. The copolymer of ethylene may contain up to 30% by weight, e.g. from about 0.1 to 25% by weight preferably from 5 to 25% by weight of at least one C3 to C8 alpha-olefin e.g. propylene, butene-1, hexene-1, methyl-4-pentene-1 or octene-1. Advantageously, the polymers or copolymers of ethylene are in the form of a powder having a bulk density from 0.3 to 0.55, preferably from 0.35 to 0.5 g/cm$^3$, and preferably consisting of spheroidal particles, having a mass-average diameter, Dm, from 150 to 1000, preferably from 300 to 800 microns and a narrow particle size distribution such that the ratio of Dm to the number-average diameter Dn of the particles is not higher than 3, preferably not higher than 2.5 and especially not higher than 2.

When the weight average molecular weight, Mw, of the polymers or copolymers of ethylene is from $10^5$ to 3 x $10^5$, the molecular weight distribution (expressed by Mw/Mn) is very narrow, particularly in the range from 2 to 4, preferably from 2 to 3.5.

Method of determining the mass-average (Dm) and number-average (Dn) diameters of particles.

The mass-average (Dm) and number-average (Dn) diameters of the support or catalyst particles are measured on the basis of microscopic observations, by means of the Optomax image analyser (Micro-Measurements Ltd, Great Britain). The principle of the measurement consists in obtaining, from the experimental study of a population of particles using optical microscopy, a frequency table which gives the number (ni) of particles belonging to each class (i) of diameters, each class (i) being characterized by an intermediate diameter (di) included within the limits of the said class. According to the approved French Standard NF X 11-630 of June

1981, Dm and Dn are given by the following formulae:

$$\text{mass-average diameter: } Dm = \frac{\Sigma ni(di)^3 di}{\Sigma ni(di)^3}$$

$$\text{number-average diameter: } Dn = \frac{\Sigma ni.di}{\Sigma ni}$$

The ratio Dm/Dn characterizes the particle size distribution; it is sometimes called "width of the particle size distribution". The measurement using the Optomax image analyser is carried out by means of an inverted microscope which permits the examination of the suspensions of support or catalyst particles with a magnification of between 16 and 200 times. A television camera picks up the images given by the inverted microscope and transmits them to a computer which analyses the images received line by line and point by point on each line, in order to determine the particle dimensions or diameters, and then to classify them.

Measurement of the molecular weight distribution.

The molecular weight distribution of a (co)polymer is calculated according to the ratio of the weight-average molecular weight, Mw, to the number-average molecular weight, Mn, of the (co)polymer, from a molecular weight distribution curve obtained by means of a "Waters"(Trademark) model "150" ® gel permeation chromatograph (High Temperature Size Exclusion Chromatograph),the operating conditions being the following:

- solvent: 1,2,4-trichlorobenzene
- solvent flow rate: 1 ml/minute
- three "Shodex" ® (Trademark) model "AT 80 M S " columns
- temperature: 150°C
- sample concentration: 0.1% by weight
- injection volume: 500 microlitres
- detection by a refractometer integral with the chromatograph
- calibration using a high density polyethylene sold by BP Chemicals S.N.C. under the trade name "Rigidex 6070EA":Mw = 65,000 and Mw/Mn = 4 and a high density polyethylene which has : Mw = 210,000 and Mw/Mn = 17.5.

The following nonlimiting examples illustrate the invention.

Example 1

a) Preparation of a support

10.2 litres of a mixture containing 10 moles of dibutylmagnesium in n-hexane, followed by 6.45 litres of n-hexane and finally 1 litre of diisoamyl ether were introduced in the course of a first stage under nitrogen, at room temperature (25°C), into a 30-litre stainless steel reactor equipped with a stirrer rotating at a speed of 600 revolutions per minute and a jacket. In a second stage, where the speed of the stirrer was maintained at 600 revolutions per minute and the reaction temperature at 25°C, 2.4 1 of tert-butyl chloride were added to the mixture thus obtained, at a constant flow rate during 12 hours. At the end of this period the reaction mixture was maintained at 25°C for 3 hours. The precipitate obtained was washed with 15 litres of n-hexane at 25°C. The solid product obtained constituted the magnesium dichloride support, containing 0.12 moles of diisoamyl ether and less than 0.0001 mole of Mg-C bond per mole of magnesium dichloride. When examined with a microscope, the support was in the shape of spheroidal particles which had a mass-average diameter of 35 microns and an extremely narrow particle size distribution, such that the Dm/Dn ratio of the particles was equal to 1.4.

The specific surface of the support was approximately 45 $m_2/g$ (BET).

b) Preparation of a catalyst

285 ml of an n-hexane suspension of the previously prepared support containing 100 millimoles of magnesium were introduced at 25°C under nitrogen atmosphere into a glass reactor with a capacity of 1 litre, equipped with a stirrer rotating at 350 revolutions per minute and with a heating and cooling system, followed by 20 millimoles of n-butanol. The mixture was kept stirred at 25°C for 1 hour. At the end of this period the support is washed twice, each with 200 ml of n-hexane at 25°C.

A 100 ml n-hexane suspension of the previously washed support, containing 100 millimoles of magnesium, was kept at 25°C under a nitrogen atmosphere in the same reactor. 100 ml of a solution of bis (cyclopentadienyl)dichlorozirconium (Cp2ZrCl2) in toluene containing 5 millimoles of Zr were then introduced into the reactor at 25°C, with stirring. The reactor was then heated to 70°C and the mixture was then kept stirred at 70°C for 2 hours. At the end of this period the reactor was cooled to 50°C and the catalyst thus obtained was washed four times, each with 200 ml of n-hexane at 50°C and then twice, each with 200 ml of n-hexane at 25°C, while cooling the reactor to 25°C. A solid catalyst which was ready for use was obtained in the form of spheroidal particles which had Dm = 35 microns and a Dm/Dn ratio = 1.4. It contained the elements Zr and Mg in a molar ratio Zr/Mg = 0.0113

c) Polymerization of ethylene in suspension in n-hexane

500 ml of n-hexane were introduced under a nitrogen atmosphere into a stainless steel reactor with a capacity of 2 litres, equipped with a stirrer rotating at 350 revolutions/minute and with a heating and cooling system. The reactor was heated to 70°C and a quantity of previously prepared catalyst was introduced into it, corresponding to 0.0025 millimoles of zirconium and 25 milliatoms of aluminium

as methylaluminoxane (MAO) in solution at a concentration of 30% by weight in toluene, the solution of (MAO) being sold by Schering company (Germany). A volume of 50 ml of hydrogen, measured under normal conditions, was then introduced into the reactor, followed by ethylene at a steady flow rate of 60 g/h during 75 minutes. At the end of this period the polymerization was stopped and after the n-hexane had been removed a polyethylene powder was recovered, which had a melt index of 3.9 g/10 minutes, measured at 190°C under a 2.16 kg weight. The Mw/Mn ratio of the polythylene, measured by GPC, was 2.3.

Example 2

a) Preparation of a support

This was exactly identical with that of Example 1.

b) Preparation of a catalyst

The preparation was carried out exactly as in Example 1, apart from maintaining the reactor at 25°C and the mixture stirred at 25°C for 2 hours after the introduction of the zirconium compound in the reactor. The catalyst thus obtained was then washed six times, each with 200 ml of n-hexane at 25°C. A solid catalyst which was ready for use was obtained in the form of spheroidal particles which had Dm = 35 microns and a Dm/Dn ratio = 1.4. It contained the elements Zr, and Mg in a molar ratio Zr/Mg = 0.01.

c) Polymerization of ethylene in suspension in n-hexane

A polymerization was carried out exactly as in Example 1, apart from using the previously prepared catalyst.

A polyethylene powder was recovered, which had a melt index of 2g/10 minutes measured at 190°C under a 2.16 kg weight. The Mw/Mn ratio of the polyethylene, measured by GPC, was 2.3.

Example 3

a) Preparation of a support

This was exactly identical with that of Example 1.

b) Preparation of a catalyst

100 ml of a suspension in n-hexane of the previously prepared support containing 100 millimoles of magnesium were introduced at 25°C under nitrogen atmosphere into a glass reactor with a capacity of 1 litre equipped with a stirrer rotating at 350 revolutions per minute and with a heating and cooling system, followed slowly by 100 millimoles of n-butanol over 2 hours. At the end of this period the support was washed once with 500 ml of n-hexane at 25°C.

A 100 ml n-hexane suspension of the previously washed support, containing 100 millimoles of magnesium was kept at 25°C under nitrogen atmosphere in the same reactor. 14 ml of a solution of (MAO) in toluene, containing 25 milliatoms of aluminium were then introduced at 25°C into the reactor with stirring. The reactor was heated to 70°C and the mixture was kept stirred at 70°C for 2 hours. The reactor was cooled to 50°C and the solid obtained was washed four times, each with 200 ml of n-hexane at 50°C and then twice, each with 200 ml of n-hexane at 25°C, while the reactor was cooled to 25°C. 100 ml of a solution of (Cp2ZrCl2) in toluene, containing 5 millimoles of zirconium, were then introduced into the reactor at 25°C with stirring. The reactor was heated to 70°C and the mixture was kept stirred at 70°C for 2 hours. The reactor was cooled to 50°C and the solid catalyst obtained was washed four times, each with 200 ml of n-hexane at 50°C and then twice, each with 200 ml of n-hexane at 25°C while the reactor was cooled to 25°C.

A solid catalyst which was ready for use was obtained, containing the elements Zr, Mg and Al and the butoxy radical in the following molar ratios:

Zr/Mg = 0.0111
Al/Zr = 9
Butoxy/Mg = 0.88

c) Polymerization of ethylene in suspension in n-hexane

The polymerization was carried out exactly as in Example 1, apart from using the previously prepared catalyst.

A polyethylene powder was obtained which had a melt index of 6.8 g/10 minutes measured at 190°C under 2.16 kg. The Mw/Mn ratio of the polyethylene was 2.1.

Example 4

a) Preparation of a support

This was exactly identical with that of Example 1.

b) Preparation of a catalyst

100 ml of a toluene suspension of the previously prepared support containing 100 millimoles of magnesium were introduced at 25°C under nitrogen atmosphere into a glass reactor with a capacity of 1 litre, equipped with a stirrer rotating at 350 revolutions per minute and with a heating and cooling system, followed by 20 millimoles of n-butanol. The mixture was kept stirred at 25°C for 1 hour. At the end of this period the support was washed twice, each with 100 ml of toluene at 25°C.

A 100 ml toluene suspension of the previously washed support, containing 100 millimoles of magnesium, was kept at 25°C in the same reactor under nitrogen atmosphere. 250 ml of a mixture in toluene

containing 10 millimoles of (Cp2ZrC12) and 250 milliatoms of aluminium as (MAO) in solution at a concentration of 30% by weight in toluene had been previously prepared in a separate vessel under nitrogen atmosphere, by contacting (CpZrCl2) and (MAO) with stirring at 25°C for 1 hour. The mixture was then introduced into the reactor at 25°C with stirring. The ractor was heated to 70°C and the mixture was kept stirred at 70°C for 2 hours. At the end of this period, the catalyst thus obtained was washed ten times, each with 200 ml of n-hexane at 70°C. A solid catalyst which was ready for use was obtained in the form of spheroidal particles which had Dm = 35 microns and a Dm/Dn ratio = 1.4. It contained the elements Zr, Mg and Al in the following molar ratios:

Zr/Mg = 0.04
Al/Zr = 0.16

c) Preparation of a prepolymer

Into a 5 litre stainless steel reactor equipped with a stirrer rotating at 500 revolutions/minute were introduced under nitrogen 2 litres of n-hexane which were heated to 70°C, then a mixture consisting of 260 milliatoms of aluminium as (MAO) in solution at a concentration of 30% by weight in toluene and a quantity of previously prepared catalyst corresponding to 1.3 milliatoms of zirconium. Ethylene was then introduced into the reactor at a uniform rate of 133 g/h for 90 minutes. At the end of this period, the reactor was cooled at ambient temperature (20°C) and the content of the reactor was transferred to a rotary evaporator and the solvent was evaporated off under reduced pressure at a temperature of 60°C. A prepolymer was thus obtained and stored under nitrogen. It contained 153 g of polyethylene per millimole of zirconium and the atomic ratio Al/Zr was 200. It consisted of spheroidal particles having Dm = 90 microns and a particle size distribution such that the ratio Dm/Dn- = 1.5.

d) Gas phase polymerization of ethylene

A powder charge of 800 g of a polyethylene originating from a preceding polymerization and which had been stored under nitrogen, was introduced into a fluidized bed reactor having a diameter of 18 cm. The reactor was heated to 80°C and ethylene was introduced into it, so as to obtain a pressure of 1.0 MPa. Ethylene passed upwardly through the bed with a fluidization speed of 30 cm/sec.

25 g of the previously prepared prepolymer were introduced into the fluidized bed reactor and the temperature in the bed was kept at 80°C during 8 hours. A polyethylene powder was thus prepared, having a density of 0.95 g/cm$^3$, a melt index (ASTM D 1238 condition E) of 0.1 g/10 minutes, a molecular weight distribution such that Mw/Mn = 2.5, a zirconium content of 5 (ppm) parts per million by weight, a level of vinyl unsaturation of 0.4 per 1000 carbon atoms and a level of vinylidene unsaturation of 0.1 per 1000 carbon atoms. The powder consisted of spheroidal particles, having Dm = 400 microns and a ratio Dm/Dn = 1.5. It had a bulk density of 0.45 g/cm$^3$.

Example 5

a) Preparation of a support

This was exactly indentical with that of Example 1.

b) Preparation of a catalyst

The preparation was carried out exactly as in Example 4, apart from preparing 250 ml of a mixture in toluene containing 5 millimoles of (Cp2ZrCl2) and 125 milliatoms of aluminium as (MAO) in solution at a concentration of 30% by weight in toluene, and apart from introducing the mixture into the reactor.

A solid catalyst was obtained in the form of spheroidal particles which had Dm = 35 microns and a Dm/Dn ratio = 1.4. It contained the elements Zr, Mg and Al in the following molar ratios:

Zr/Mg = 0.05
Al/Zr = 0.14

c) Preparation of a prepolymer

The preparation was carried out exactly as in Example 4, apart from using the previously prepared catalyst.

d) Gas phase polymerization of ethylene

The polymerization was carried out exactly as in Example 4, apart from using the previously prepared prepolymer.

A polyethylene powder was thus prepared, having a density of 0.947 g/cm$^3$, a melt index (ASTM D 1238 condition E) of 0.1 g/10 minutes, a molecular weight distribution such that Mw/Mn = 2.6, and a zirconium content of 4 ppm. The powder consisted of spheroidal particles, having Dm = 450 microns and a ratio Dm/Dn = 1.6. It had a bulk density of 0.46 g/cm$^3$.

Example 6

a) Preparation of a support

This was exactly identical with that of Example 1.

b) Preparation of a catalyst

The preparation was carried out exactly as in Example 5, apart from maintaining the reactor at 25°C and the mixture stirred at 25°C for 2 hours after the introduction into the reactor of the mixture containing (Cp2ZrCl2) and (MAO).

A solid catalyst was obtained in the form of spheroidal particles which had Dm = 35 microns and a Dm/Dn ratio = 1.5. It contained the elements

Zr, Mg and Al in the following molar ratios:

Zr/Mg = 0.034
Al/Zr = 0.15

c) Preparation of a prepolymer

The preparation was carried out exactly as in Example 4, apart from using the previously prepared catalyst.

d) Gas phase polymerization of ethylene

The polymerization was carried out exactly as in Example 4, apart from using the previously prepared prepolymer.

A polyethylene powder was thus prepared, having a density of 0.946 g/cm$^3$, a melt index (ASTM D 1238 condition E) of 0.2 g/10 minutes, a molecular weight distribution such that Mw/Mn = 2.5 and a zirconium content of 5 ppm. The powder consisted of spheroidal particles, having Dm = 400 microns and a ratio Dm/Dn = 1.7. It had a bulk density of 0.46 g/cm$^3$.

**Claims**

**1.** Solid catalyst suitable for a heterogeneous process for polymerizing one or more olefins, the solid catalyst being prepared by contacting a zirconium metallocene with a magnesium chloride support, characterized in that the solid catalyst is obtainable by a process comprising:

(1) a first stage, wherein a solid support (A) containing from 80 to 99.5 mol% of magnesium dichloride and from 0.5 to 20 mol% of at least one organic electron-donor compound, D1, free from labile hydrogen, the solid support (A) being in the form of spheroidal particles with a mass-average diameter, Dm, of 10 to 100 microns and a particle size distribution, such that the ratio of Dm to the number-average diameter, Dn, of the particles is not higher than 3, is brought into contact with at least one electron-donor compound, D2, containing labile hydrogen,

(2) then, a second stage, wherein the support resulting from the first stage is brought into contact with a zirconium metallocene (B), optionally with an organoaluminium compound (C), preferably an aluminoxane.

**2.** Solid catalyst according to Claim 1, characterized in that the organic electron-donor compound, D1, free from labile hydrogen is chosen from ethers, esters, thioethers, sulphones, sulphoxides, secondary amides, tertiary amines, tertiary phosphines and phosphoramides.

**3.** Solid catalyst according to Claim 1, characterized in that the electron-donor compound, D2, containing labile hydrogen is chosen from alcohols, phenols, primary amides, primary or secondary amines and primary or secondary phosphines.

**4.** Process for preparing the solid catalyst according to any of Claims 1 to 3, characterized in that:

- in the first stage, the compound D2 is used in an amount such that the molar ratio of the quantity of D2 to that of magnesium is from 0.05 to 3, and
- in the second stage, the amounts of the components used are such that the molar ratio of the quantity of Zr of (B) to that of Mg is from 0.001 to 1, and the molar ratio of the quantity of Al of (C) to that of Zr of (B) is from 0 to 1000.

**5.** Prepolymer particles characterized in that they comprise (i) a polyethylene or a copolymer of ethylene with up to 10% by weight of at least one C3 to C8 alpha-olefin and (ii) an active catalyst for a further (co-)polymerization of olefins essentially containing atoms of zirconium, magnesium, chlorine and aluminium, and comprising an organoaluminium compound as cocatalyst and the solid catalyst according to any of Claims 1 to 3, or prepared according to Claim 4, in a quantity such that the prepolymer contains from 0.1 to 500 g of polyethylene or copolymer of ethylene per millimole of zirconium and the atomic ratio Al/Zr is from 10 to 1000.

**6.** Prepolymer particles according to Claim 5, characterized in that they consist of spheroidal particles, having a mass-average diameter, Dm, from 10 to 500 microns and a particle size distribution such that the ratio of Dm to the number-average diameter, Dn, of the particles is not higher than 3.

**7.** Process for preparing the prepolymer particles according to Claim 5 or 6, characterized in that the solid catalyst according to any of Claims 1 to 3 or prepared by a process according to Claim 4 is contacted with ethylene or a mixture of ethylene and at least one C3 to C8 alpha-olefin in a liquid hydrocarbon slurry or in a gas phase, at a temperature from 0 to 100°C, under a total pressure from 0.1 to 5 MPa, in the presence of an organoaluminium compound in a quantity such that atomic ratio Al/Zr is from 10 to 1000.

**8.** Process for polymerizing ethylene or copolymerizing ethylene with at least one C3 to C8 alpha-olefin, characterized in that the solid catalyst according to any of Claims 1 to 3 or prepared according to Claim 4, or the prepolymer particles according to Claim 5 or 6 or prepared according to Claim 7, are contacted

with ethylene or a mixture of ethylene with at least one C3 or C8 alpha-olefin, at a temperature of 10 to 110°C, under a total pressure of 0.1 to 5 MPa, in the presence of an organoaluminium compound, in a quantity such that the atomic ratio Al/Zr is from 10 to 1000.

**9.** Polymer or copolymer powder obtainable by the process according to Claim 7 or 8, comprising (i) a polyethylene or a copolymer of ethylene with up to 30% by weight of at least one C3 to C8 alpha-olefin, having a density from 0.89 to 0.965 $g/cm^3$, a melt index (ASTM D 1238 condition E) from 0.01 to 50g/ 10 minutes, a molecular weight distribution from 2 to 5 and a level of ethylenic unsaturation not higher than 0.6 per 1000 carbon atoms and (ii) catalyst residues essentially consisting of atoms of magnesium, chlorine, aluminium and zirconium, the quantity of zirconium being from 0.5 to 20 parts per million by weight, the said powder having a bulk density from 0.3 to 0.55 $g/cm^3$.

**10.** Polymer or copolymer powder according to Claim 9, characterized in that it consists of spheroidal particles, having a mass-average diameter, Dm, from 150 to 1000 microns and a particles size distribution such that the ratio of Dm to the number-average diameter, Dn, of the particles is not higher than 3.

**Patentansprüche**

**1.** Fester Katalysator, der für ein heterogenes Verfahren zur Polymerisation eines oder mehrerer Olefine geeignet ist, wobei der feste Katalysator durch Inkontaktbringen eines Zirconiummetallocens mit einem Magnesiumchloridträger hergestellt wird, dadurch gekennzeichnet, daß der feste Katalysator durch ein Verfahren erhältlich ist, welches umfaßt:

(1) eine erste Stufe, in der ein fester Träger (A), der 80 bis 99,5 Mol-% Magnesiumdichlorid und 0,5 bis 20 Mol-% mindestens einer organischen Elektronendonorverbindung, D1, die frei von labilem Wasserstoff ist, enthält, wobei der feste Träger (A) in Form von kugelförmigen Teilchen mit einem massemittleren Durchmesser, Dm, von 10 bis 100 µm und einer Teilchengrößenverteilung, so daß das Verhältnis von Dm zum zahlenmittleren Durchmesser, Dn, der Teilchen nicht größer 3 ist, vorliegt, mit mindestens einer Elektronendonorverbindung, D2, die labilen Wasserstoff enthält, in Kontakt gebracht wird,
(2) anschließend eine zweite Stufe, worin der aus der ersten Stufe erhaltene Träger mit einem Zirconiummetallocen (B), gegebenenfalls mit einer Organoaluminiumverbindung (C), vorzugsweise einem Aluminoxan, in Kontakt gebracht wird.

**2.** Fester Katalysator nach Anspruch 1, dadurch gekennzeichnet, daß die organische Elektronendonorverbindung, D1, die frei von labilem Wasserstoff ist, ausgewählt ist aus Ethern, Estern, Thioethern, Sulfonen, Sulfoxiden, sekundären Amiden, tertiären Aminen, tertiären Phosphinen und Phosphoramiden.

**3.** Fester Katalysator nach Anspruch 1, dadurch gekennzeichnet, daß die Elektronendonorverbindung, D2, die labilen Wasserstoff enthält, ausgewählt ist aus Alkoholen, Phenolen, primären Amiden, primären oder sekundären Aminen und primären oder sekundären Phosphinen.

**4.** Verfahren zur Herstellung des festen Katalysators nach einem der Ansprüche 1 bis 3, dadurch gekennzeichnet, daß:

- in der ersten Stufe die Verbindung D2 in einer derartigen Menge eingesetzt wird, daß das Molverhältnis der Menge von D2 zu jener von Magnesium 0,05 bis 3 beträgt und
- in der zweiten Stufe die Mengen an eingesetzten Komponenten derart ausgelegt sind, daß das Molverhältnis der Menge von Zr von (B) zu jener von Mg 0,001 bis 1 beträgt und das Molverhältnis der Menge von Al von (C) zu jener von Zr von (B) 0 bis 1000 beträgt.

**5.** Vorpolymerteilchen, dadurch gekennzeichnet, daß sie (i) ein Polyethylen oder ein Copolymer von Ethylen mit bis zu 10 Gew.-% mindestens eines C3- bis C8-α-Olefins und (ii) einen aktiven Katalysator für eine weitere (Co-)polymerisation von Olefinen, der im wesentlichen Atome von Zirconium, Magnesium, Chlor und Aluminium enthält, umfassen und umfassend eine Organoaluminiumverbindung als Cokatalysator und den festen Katalysator nach einem der Ansprüche 1 bis 3 oder hergestellt gemäß Anspruch 4, in einer derartigen Menge, daß das Vorpolymer 0,1 bis 500 g Polyethylen oder Copolymer von Ethylen pro Millimol Zirconium enthält und das Atomverhältnis Al/Zr 10 bis 1000 beträgt.

**6.** Vorpolymerteilchen nach Anspruch 5, dadurch gekennzeichnet, daß sie aus kugelförmigen Teilchen bestehen, die einen massemittleren Durchmesser, Dm, von 10 bis 500 µm und eine Teilchengrößenverteilung aufweisen, derart ausgelegt, daß das Verhältnis von Dm zu dem zahlenmittleren Durchmesser, Dn, der Teilchen nicht größer 3 ist.

**7.** Verfahren zur Herstellung der Vorpolymerteilchen nach Anspruch 5 oder 6, dadurch gekennzeichnet, daß der feste Katalysator nach einem der Ansprüche 1 bis 3 oder hergestellt durch ein Verfahren nach Anspruch 4 mit Ethylen oder einem Gemisch von Ethylen und mindestens einem C3- bis C8-α-Olefin in einer flüssigen Kohlenwasserstoffaufschlämmung oder einer Gasphase bei einer Temperatur von 0 bis 100°C unter einem Gesamtdruck von 0,1 bis 5 MPa in Gegenwart einer Organoaluminiumverbindung in einer Menge in Kontakt gebracht wird, so daß das Atomverhältnis Al/Zr 10 bis 1000 beträgt.

**8.** Verfahren zur Polymerisation von Ethylen oder Copolymerisation von Ethylen mit mindestens einem C3- bis C8-α-Olefin, dadurch gekennzeichnet, daß der feste Katalysator nach einem der Ansprüche 1 bis 3 oder hergestellt nach Anspruch 4 oder die Vorpolymerteilchen nach Anspruch 5 oder 6 oder hergestellt nach Anspruch 7, mit Ethylen oder einem Gemisch von Ethylen mit mindestens einem C3- oder C8-α-Olefin bei einer Temperatur von 10 bis 110°C unter einem Gesamtdruck von 0,1 bis 5 MPa in Gegenwart einer Organoaluminiumverbindung in einer Menge derart ausgelegt, daß das Atomverhältnis Al/Zr 10 bis 1000 beträgt, in Kontakt gebracht wird.

**9.** Polymer- oder Copolymerpulver, erhältlich durch das Verfahren nach Anspruch 7 oder 8, umfassend (i) ein Polyethylen oder ein Copolymer von Ethylen mit bis zu 30 Gew.-% mindestens eines C3- bis C8-α-Olefins mit einer Dichte von 0,89 bis 0,965 g/cm$^3$, einem Schmelzindex (ASTM D 1238 Bedingung E) von 0,01 bis 50 g/10 Minuten, einer Molekulargewichtsverteilung von 2 bis 5 und einem Anteil an ethylenischer Ungesättigtheit von nicht mehr als 0,6 pro 1000 Kohlenstoffatome und (ii) Katalysatorrückstände, die im wesentlichen aus Atomen von Magnesium, Chlor, Aluminium und Zirconium bestehen, wobei die Menge an Zirconium 0,5 bis 20 Teile pro Millionen, auf das Gewicht bezogen, beträgt und das Pulver eine Schüttdichte von 0,3 bis 0,55 g/cm$^3$ aufweist.

**10.** Polymer- oder Copolymerpulver nach Anspruch 9, dadurch gekennzeichnet, daß es aus kugelförmigen Teilchen besteht, die einen massemittleren Durchmesser, Dm, von 150 bis 1000 µm und eine Teilchengrößenverteilung aufweisen, derart ausgelegt, daß das Verhältnis von Dm zum zahlenmittleren Durchmesser, Dn, der Teilchen nicht größer 3 ist.

**Revendications**

**1.** Catalyseur solide approprié pour un procédé hétérogène pour la polymérisation d'une ou plusieurs oléfines, le catalyseur solide étant préparé en mettant en contact un métallocène de zirconium avec un support de chlorure de magnésium, caractérisé en ce que l'on peut obtenir le catalyseur solide à l'aide d'un procédé comprenant

(1) une première étape, dans laquelle un support solide (A) contenant de 80 à 99,9% en moles de dichlorure de magnésium et de 0,5 à 20% en moles d'au moins un composé organique donneur d'électrons, DI, exempt d'hydrogène labile, le support solide (A) étant sous la forme de particules sphéroïdales avec un diamètre moyen en masse, Dm, compris entre 10 et 100 µm et une distribution granulométrique telle que le rapport de Dm au diamètre moyen en nombre, Dn, des particules ne dépasse pas 3, est mis en contact avec au moins un composé donneur d'électrons, D2, contenant un hydrogène labile.

(2) ensuite, une seconde étape, dans laquelle le support solide provenant de la première étape est mis en contact avec un métallocène de zirconium (B), éventuellement avec un composé organoaluminique (C), de préférence un aluminoxane.

**2.** Catalyseur solide selon la revendication 1, caractérisé en ce que le composé organique donneur d'électrons, DI, exempt d'hydrogène labile est choisi parmi les éthers, les esters, les thioéthers, les sulfones, les sulfoxydes, les amides secondaires, les amines tertiaires, les phosphines tertiaires et les phosphoramides.

**3.** Catalyseur solide selon la revendication 1, caractérisé en ce que le composé donneur d'électrons, D2, contenant un hydrogène labile est choisi parmi les alcools, les phénols, les amides primaires, les amines primaires ou secondaires et les phosphines primaires ou secondaires.

**4.** Procédé pour préparer le catalyseur solide selon l'une quelconque des revendications 1 à 3, caractérisé en ce que:

- dans la première étape, on utilise le composé D2 en une quantité telle que le rapport molaire de la quantité de D2 à celle de magnésium soit compris entre 0,05 et 3, et
- dans la seconde étape, les quantités des composants utilisés sont telles que le rapport molaire de la quantité de Zr de (B) à celle de Mg soit compris entre 0,001 et 1, et le rapport molaire de la quantité de Al de (C) à celle de Zr de (B) soit compris entre 0 et 1 000.

**5.** Particules de prépolymère caractérisées en ce qu'elles comprennent (i) un polyéthylène ou un copolymère d'éthylène contenant jusqu'à 10% en poids d'au moins une alpha-oléfine en $C_3$ à $C_8$ et (ii) un catalyseur actif pour une (co)polymérisation supplémentaire d'oléfines contenant essentiellement des atomes de zirconium, de magnésium, de chlore et d'aluminium, et comprenant un composé organo-aluminique en tant que cocatalyseur et le catalyseur solide selon l'une des revendications 1 à 3, ou préparé selon la revendication 4, en une quantité telle que le prépolymère contienne entre 0,1 et 500 g de polyéthylène ou de copolymère d'éthylène par millimole de zirconium et le rapport atomique Al/Zr est compris entre 10 et 1 000.

6. Particules de prépolymère selon la revendication 5, caractérisées en ce qu'elles se composent de particules sphéroïdales, ayant un diamètre moyen en masse, Dm, compris entre 10 et 500 µm et une distribution granulométrique telle que le rapport de Dm au diamètre moyen en nombre, Dn, des particules ne dépasse pas 3.

7. Procédé pour préparer les particules de prépolymère selon l'une des revendications 5 ou 6, caractérisé en ce que le catalyseur solide préparé selon l'une des revendications 1 à 3 ou préparé à l'aide d'un procédé selon la revendication 4 est mis en contact avec de l'éthylène ou un mélange d'éthylène et d'au moins une alpha-oléfine en $C_3$ à $C_8$ en suspension dans un hydrocarbure liquide ou en phase gazeuse, à une température comprise entre 0 et 100°C, sous une pression totale comprise entre 0,1 et 5 MPa, en présence d'un composé organoaluminique en une quantité telle que le rapport atomique Al/Zr soit compris entre 10 et 1 000.

8. Procédé pour la polymérisation de l'éthylène ou la copolymérisation de l'éthylène avec au moins une alpha-oléfine en $C_3$ à $C_8$, caractérisé en ce que le catalyseur solide préparé selon l'une des revendications 1 à 3, ou préparé selon la revendication 4, ou les particules de prépolymère préparées selon l'une des revendications 5 ou 6 ou préparées selon la revendication 7, sont mis en contact avec de l'éthylène ou un mélange d'éthylène avec au moins une alpha-oléfine en C3 à C8, à une température comprise entre 10 et 110°c, sous une pression totale comprise entre 0,1 et 5 MPa, en présence d'un composé organoaluminique, en une quantité telle que le rapport atomique Al/Zr soit compris entre 10 et 1 000.

9. Poudre de polymère ou de copolymère que l'on peut obtenir à l'aide d'un procédé selon l'une des revendications 7 ou 8, comprenant (i) un polyéthylène ou un copolymère d'éthylène contenant jusqu'à 30% en poids d'au moins une alpha-oléfine en $C_3$ à $C_8$, ayant une densité comprise entre 0,89 et 0,965 g/cm$^3$, un indice de fusion (ASTM D 1238 condition E) compris entre 0,01 et 50 g/10 minutes, une distribution de masse moléculaire comprise entre 2 et 5 et un degré d'insaturation éthylénique ne dépassant pas 0,6 pour mille atomes de carbone et (ii) des résidus catalytiques se composant essentiellement d'atomes de magnésium, de chlore, d'aluminium et de zirconium, la quantité de zirconium étant comprise entre 0,5 et 20 parties par million en poids, ladite poudre ayant une densité apparenté comprise entre 0,3 et 0,55 g/cm$^3$.

10. Poudre de polymère ou de copolymère selon la revendication 9, caractérisée en ce qu'elle se compose de particules sphéroïdales, ayant un diamètre moyen en masse, Dm, compris entre 150 et 1 000 µm et une distribution granulométrique telle que le rapport de Dm au diamètre moyen en nombre, Dn, des particules ne dépasse pas 3.